# EUROPÄISCHE PATENTANMELDUNG

(11) **EP 0 787 539 A2**
(43) Veröffentlichungstag der Anmeldung: **06.08.1997**
(21) Anmeldenummer: 97101537.5
(22) Anmeldetag: 31.01.1997
(51) Int. Cl.: B08B 17/04

(54) **Vorrichtung zum Aufbringen einer selbstklebenden Schutzfolie gegen Graffiti auf eine Wand**

(30) Priorität: 31.01.1996 DE 19603344
(71) Anmelder: Lins, Volker, 35423 Lich (DE)
(72) Erfinder: Lins, Volker, 35423 Lich (DE)
(74) Vertreter: Carstens, Wilhelm, Dipl.-Phys.

(57) **Zusammenfassung**

Bei einer Vorrichtung zum Aufbringen einer von einem Wickel abzuziehenden und vorzugsweise selbstklebenden Schutzfolie gegen Graffiti oder dgl. auf eine Wand eines Körpers, insbesondere Bus- oder Waggonwand, ist vorgesehen, daß der Wickel (SW) auf einer längs der Wand (W) verschiebbaren Wickeltrageinrichtung (2) drehbar angeordnet ist und die Wickeltrageinrichtung während des Verschiebens längs der Wand in einem Führungseingriff (23,24,K) mit dem Körper (E) gehalten ist derart, daß die Wickeleinrichtung bzw. die Achse des Wickels parallel zur Wand ausgerichtet ist.

## Beschreibung

Die Erfindung betrifft eine Vorrichtung zum Aufbringen einer von einem Wickel abzuziehenden und vorzugsweise selbstklebenden Schutzfolie gegen Graffiti oder dgl. auf eine Wand eines Körpers, insbesondere Bus- oder Waggonwand.

Insbesondere in Großstädten werden Wandflächen von Gebäuden und Brücken und von öffentlichen Verkehrsmitteln wie Busse und Bahnen durch aufgesprühte Graffiti verschmutzt. Es ist bekannt, die zu schützenden Flächen mit einer Antigraffiti- Schutzfolie zu bekleben, von deren Oberfläche aufgesprühte Farbe mit Hilfe von Lösungsmitteln leicht wieder entfernt werden kann, ohne daß die Folie selbst beschädigt wird.

Da diese Folien großflächig aufgetragen werden müssen und dies von Hand geschieht, ist es die Aufgabe der vorliegenden Erfindung, eine Vorrichtung zum Aufbringen der Schutzfolie zu schaffen, die das Aufbringen erleichtert.

Diese Aufgabe wird dadurch gelöst, daß der Wickel auf einer längs der Wand verschiebbaren Wickeltrageinrichtung drehbar angeordnet ist und die Wickeltrageinrichtung während des Verschiebens längs der Wand in einem Führungseingriff mit dem Körper gehalten ist derart, daß die Wickeleinrichtung bzw. die Achse des Wickels parallel zur Wand ausgerichtet ist.

Durch die Anordnung des Wickels auf der längs der Wand verschiebbaren Wickeltrageinrichtung wird das Abziehen der Schutzfolie vom Wickel erleichtert, während gleichzeitig eine lagegerechte Ausrichtung auf die zu beklebende Wand sichergestellt ist.

Es kommt nur auf die relative Verschiebung der Wickeltrageinrichtung zur Wand an. Wenn der die Wand aufweisende Körper selbst verschiebbar ist, z.B. ein Waggon, ist es auch denkbar, den Waggon relativ zu einer stationären Wickeltrageinrichtung zu verschieben. Die Wickeltrageinrichtung muß an ihrem Standort nur den Zwängen des Führungseingriffs folgen können.

Vorzugsweise ist vorgesehen, daß die Wickeltrageinrichtung auf einem längs der Wand verfahrbaren Wagen angeordnet ist derart, daß sie dem Führungseingriff mit dem Körper folgen kann.

Dabei ist es zweckmäßig, daß die Wickeltrageinrichtung auf dem Wagen feder-, hydro- oder pneumolelastisch abgestützt ist.

Eine besonders einfache Abstützung der Wickeltrageinrichtung auf dem Wagen wird erreicht, wenn die Wickeleinrichtung auf mindestens zwei auf Abstand angeordneten Säulen vertikal geführt ist und von zwei die Säulen jeweils umschließenden Spiralfedern abgestützt ist.

Um eine einfache Anpassung der Lage der Wickeleinrichtung an die räumliche Lage der zu beklebenden Wand zu erreichen, ist vorzugsweise vorgesehen, daß die Wickeleinrichtung in einer Ebene senkrecht zur Verschiebungsrichtung des Wagens und / oder in einer Ebene parallel zu Verschiebungsrichtung des Wagens verschwenkbar ist und / oder quer zur Verschiebungsrichtung verschiebbar ist.

Ein besonders einfacher Aufbau des Führungseingriffs wird erreicht, wenn die Wickeltrageinrichtung mindestens zwei in Verschiebungsrichtung auf Abstand angeordnete Führungsrollen aufweist, die mit einer Längskante des Körpers in Führungseingriff stehen.

Eine Grobausrichtung der Wickeltrageinrichtung auf die zu beschichtende Wand wird bereits dadurch erreicht, daß der Wagen vorzugsweise ein schienengebundener Wagen ist.

Um ein Anpressen der Schutzfolie an die Wand von Hand zu vermeiden, ist vorzugsweise vorgesehen, daß die Wickeltrageinrichtung in einem Gestell nicht nur ein Wickellager für den Schutzfolienwickel, sondern auch eine Anpreßrolle unter paralleler Achsausrichtung ihrer Achse zur Achse des Wickels aufweist, wobei der in Richtung auf die Wand beaufschlagten Anpreßrolle die von dem Wickel abgezogene Schutzfolie zuführbar ist.

Die Anpreßrolle ist vorzugsweise in Richtung auf die Wand federbeaufschlagt.

Bei Verwendung einer selbstklebenden Schutzfolie, bei der die klebende Seite der Schutzfolie durch eine Abdeckfolie abgedeckt ist, ist in der Wickeltrageinrichtung noch ein zweites Wickellager für einen Abdeckfolienwickel vorgesehen, der aus der von der Schutzfolie abgezogenen Abdeckfolie aufgewickelt wird.

Zur Automatisierung und Vergleichmäßigung des Klebevorgangs ist es zweckmäßig, daß der Wagen motorisch angetrieben ist.

Zweckmäßigerweise ist der Abdeckfolienwickel ebenfalls motorisch angetrieben. Hierdurch wird die durch den Antrieb des Wagens über die Anpreßrolle auf die Schutzfolie aufgebrachte Abzugskraft für den Abzug der Schutzfolie vom ihrem Wickel unterstützt.

Schließlich ist es auch möglich, daß zwei und mehr Wickeltrageinrichtungen übereinander auf einem Wagen angeordnet sind.

Eine Ausführungsform der erfindungsgemäßen Vorrichtung soll nun anhand der beigefügten FIGUREN näher erläutert werden. Es zeigt:
FIG.1. eine Seitenansicht einer längs eines Waggons verfahrbaren Aufbringvorrichtung,
FIG.2. eine Stirnansicht der Aufbringvorrichtung gemäß FIG.2
   und
FIG.3. eine Vertikalaufsicht auf eine Ausführungsform einer Wickeltrageinrichtung (Laminator) für eine Aufbringvorrichtung gemäß den FIG.1. und 2.

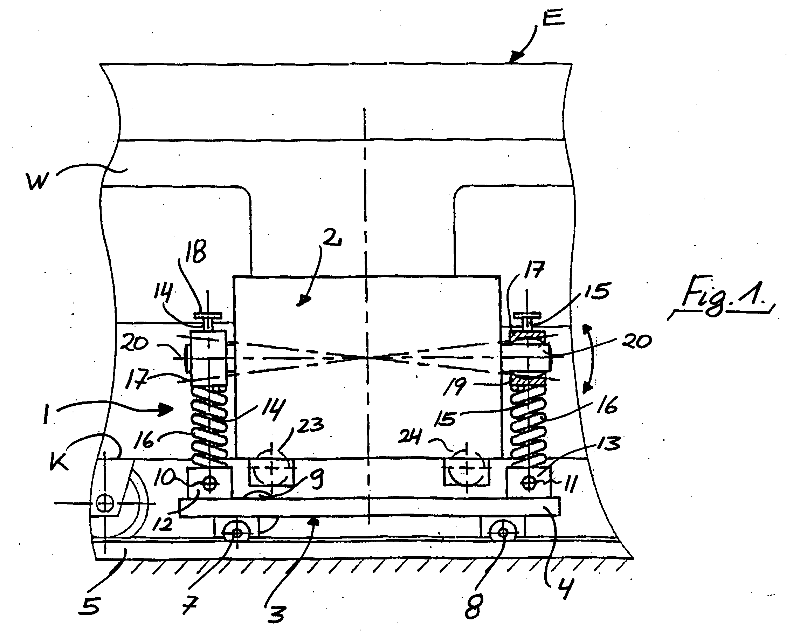

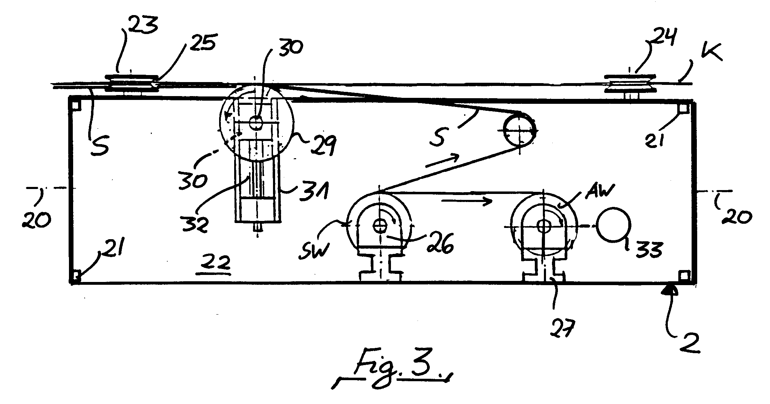

In den FIG.1. und 2. ist eine Vorrichtung 1 zum Aufbringen einer Schutzfolie S (vgl. FIG.3.) als Streifen auf die Außenwand W eines Eisenbahnpersonenwaggons E unterhalb der Fensterreihe F dargestellt. Hauptbaugruppen der Aufbringvorrichtung sind eine Wickeltrageinrichtung 2 und ein die Wickeltrageinrichtung 2 abstützender Wagen 3. Der Wagen weist eine Bodenplatte 4 auf, an deren Unterseite zwei auf Schienen 5 und 6 laufenden Radsätze 7 und 8 angeordnet sind. Die Räder können als Zahnräder ausgebildet sein, die in entsprechend ausgestaltete Schienen eingreifen. Zumindest einer der Radsätze ist über einen Antrieb 9 motorisch angetrieben. Die Schienen 5 und 6 sind parallel zu den Schienen ausgelegt, auf denen der Waggon E steht.

Auf der Oberseite der Bodenplatte 4 sind quer zu Fahrtrichtung des Wagens 3 Führungen 10 und 11 angeordnet, auf denen jeweils die Fußstücke 12 bzw. 13 von sich vertikal erstreckenden Führungssäulen 14 und 15 horizontal verschiebbar angeordnet sind. Über die Führungssäulen 14 und 15 ist jeweils mindestens eine Spiralfeder 16 geschoben, deren unteres Ende sich auf dem zugeordneten Fußstück 12 bzw. 13 abstützt.

Die oberen Enden der Spiralfedern stützen von den Führungssäulen 14 und 15 geführte Tragbacken 17 ab, die sich horizontal auf den Waggon W zu erstrecken, und drücken die Tragbacken gegen Anschläge 18. In den freien Enden der Tragbacken sind Pendellager 19 angeordnet, die sich im wesentlichen horizontal und in Schienenrichtung erstreckende Tragzapfen 20 der Wickeltrageinrichtung 2 aufnehmen.

In den FIG. 1. und 2. ist die Wickeltrageinrichtung als einfacher Quader dargestellt. Vorzugsweise wird die Einrichtung als Rahmenkonstruktion aufgebaut, wie dies in der Fig.3. durch vertikale Eckrahmenträger 21 dargestellt ist, die an einer Bodenplatte 22 befestigt sind. An der Bodenplatte 22 der Wickeltrageinrichtung 2 sind auf der Unterseite Führungsrollen 23 und 24 mit Umfangs V-Nut 25 angeordnet, die mit ihrer V-Nut 25 eine Kante K des Waggons E übergreifen und somit für eine Führung der Wickeltrageinrichtung 2 durch den Waggon sorgen.

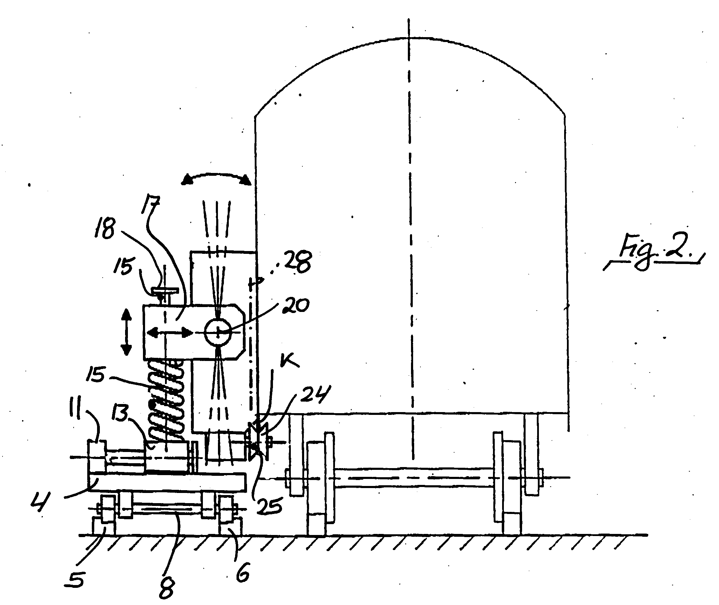

Wie in den FIG. 1. und 2. durch die verschieden Winkellagen dargestellt ist, kann die Wickeltrageinrichtung eine Schrägstellung in Verschieberichtung relativ zum Wagen 1 einnehmen (vgl. FIG.1.) und kann die Wikeltrageinrichtung quer zur Verschiebereichtung relativ zum Wagen verschwenken (vgl. FIG.2). Auch eine Querverschiebung der Wickeltrageinrichtung relativ zur von den Schienen 5 und 6 in Querrichtung fixierten Bodenplatte 3 ist möglich.

Wie schematisch aus der FIG.3. ersichtlich ist, ist in der Wickeltrageinrichtung 2 eine Wickellageranordnung 26 vorgesehen, die die beiden Enden eine Schutzfolienwickels SW lagert; neben der Wickellageranordnung 26 ist eine zweite Wickellageranordnung 27 vorgesehen, die die beiden Enden eines Abdeckfolienwickels AW lagert. Weiterhin ist in der Wickeltrageinrichtung eine Anpreßrolle 28 angeordnet, deren Achse parallel zur Achse des Schutzfolienwickels SW ausgerichtet ist. Die Welle 29 der Anpreßrolle 28 ist an ihren beiden Enden jeweils in einem Schlitten 30 gelagert, der in einer Führung 31 verschiebbar ist und von einer Federeinrichtung 32 in Richtung auf die Wand beaufschlagt ist, um den erforderlichen Anpreßdruck aufzubringen. Wie aus der FIG.3. ersichtlich ist, ragt die Anpreßrolle 28 aus dem Rahmen hervor (dies ist der Einfachheit halber in der FIG.3. nicht dargestellt).

Bei Betrieb der Aufbringvorrichtung 1 wird die vom Wickel SW abgezogenen Schutzfolie S in den Spalt zwischen Waggonwand W und Anpreßrolle 28 eingeführt, während die Abdeckfolie A auf den Abdeckfolienwickel AW durch Einschalten eines ihm zugeordneten Motors 33 aufgewickelt wird. Bei Einschalten des Motors 9 fährt der Wagen 2 an und die Schutzfolie S wird fortlaufend als Horizontalstreifen zwischen Kante K und Unterkanten der Fenster F auf den Waggon aufgebracht. Durch den Führungseingriff zwischen den Rollen 23 und 24 und der Kante K wird die Wickeltrageinrichtung 2 immer parallel zur Flächenkante gehalten und die Wickeltrageinrichtung kann insgesamt der räumlichen Lage der zu beklebenden Waggonwand folgen.

## Patentansprüche

1. Vorrichtung zum Aufbringen einer von einem Wickel abzuziehenden und vorzugsweise selbstklebenden Schutzfolie gegen Graffiti oder dgl. auf eine Wand eines Körpers, insbesondere Bus- oder Waggonwand,
**dadurch gekennzeichnet**,
daß der Wickel (SW) auf einer längs der Wand (W) verschiebbaren Wickeltrageinrichtung (2) drehbar angeordnet ist und die Wickeltrageinrichtung während des Verschiebens längs der Wand in einem Führungseingriff mit dem Körper (E) gehalten ist derart, daß die Wickeleinrichtung bzw. die Achse des Wickels parallel zur Wand ausgerichtet ist.

2. Vorrichtung nach Anspruch 1,
**dadurch gekennzeichnet**,
daß die Wickeltrageinrichtung (2) auf einem längs der Wand verfahrbaren Wagen (3)angeordnet ist derart, daß sie dem Führungseingriff mit dem Körper folgen kann.

3. Vorrichtung nach Anspruch 1 oder 2,
**dadurch gekennzeichnet**,
daß die Wickeltrageinrichtung auf dem Wagen feder(16)-, hydro- oder pneumolelastisch abgestützt ist.

4. Vorrichtung nach mindestens einem der Ansprüche 1 bis 3,
**dadurch gekennzeichnet**,
daß die Wickeleinrichtung (2) auf mindestens zwei auf Abstand angeordneten Säulen (14,15)vertikal geführt ist und von zwei die Säulen jeweils umschließenden Spiralfedern (16)abgestützt ist.

5. Vorrichtung nach mindestens einem der Ansprüche 1 bis 4,
**dadurch gekennzeichnet**,
daß die Wickeleinrichtung in einer Ebene senkrecht zur Verschiebungsrichtung des Wagens (20) und / oder in einer Ebene parallel zu Verschiebungsrichtung des Wagens (19) verschwenkbar ist und / oder quer zur Verschiebungsrichtung verschiebbar (10,11) ist.

6. Vorrichtung nach mindestens einem der Ansprüche 1 bis 5,
**dadurch gekennzeichnet**,
wenn die Wickeltrageinrichtung mindestens zwei in Verschiebungsrichtung auf Abstand angeordnete Führungsrollen (23,24) aufweist, die mit einer Längskante (K) des Körpers in Führungseingriff stehen.

7. Vorrichtung nach mindestens einem der Ansprüche 1 bis 6,
**dadurch gekennzeichnet**,
daß der Wagen ein schienengebundener (5,6) Wagen ist.

8. Vorrichtung nach mindestens einem der Ansprüche 1 bis 7,
**dadurch gekennzeichnet**,
daß die Wickeltrageinrichtung in einem Gestell ein erstes Wickellager (26) für den Schutzfolienwickel (SW) und eine Anpreßrolle (28) unter paralleler Achsausrichtung ihrer Achse zur Achse des Wickels aufweist, wobei der in Richtung auf die Wand beaufschlagten Anpreßrolle die von dem Wickel abgezogene Schutzfolie (S) zuführbar ist.

9. Vorrichtung nach mindestens einem der Ansprüche 1 bis 8,
**dadurch gekennzeichnet**,
daß die Anpreßrolle (28) ist in Richtung auf die Wand federbeaufschlagt (31) ist.

10. Vorrichtung nach mindestens einem der Ansprüche 1 bis 9,
**dadurch gekennzeichnet**,
daß bei Verwendung einer selbstklebenden Schutzfolie, bei der die klebende Seite der Schutzfolie durch eine Abdeckfolie (AW) abgedeckt ist, in der Wickeltrageinrichtung noch ein zweites Wickellager (27) für einen Abdeckfolienwickel (AW) vorgesehen ist, der aus der von der Schutzfolie abgezogenen Abdeckfolie aufgewickelt wird

11. Vorrichtung nach mindestens einem der Ansprüche 1 bis 10,
**dadurch gekennzeichnet**,
daß der Wagen motorisch (9) angetrieben ist.

12. Vorrichtung nach mindestens einem der Ansprüche 1 bis 11,
**dadurch gekennzeichnet**,
daß der Abdeckfolienwickel (AW) motorisch (33) angetrieben ist.

13. Vorrichtung nach mindestens einem der Ansprüche 1 bis 12,
**dadurch gekennzeichnet**,
daß zwei und mehr Wickeltrageinrichtungen übereinander auf einem Wagen angeordnet sind.
